# EUROPEAN PATENT SPECIFICATION

(11) **EP 4 445 725 B1**
(45) Date of publication and mention of the grant of the patent: **04.11.2026**
(21) Application number: 24168940.5
(22) Date of filing: 08.04.2024
(51) Int. Cl.: A01K 1/00, A01K 1/015, A01K 1/02, A01K 1/035, A01K 1/03

(54) **ANIMAL ENCLOSURE SYSTEM COMPRISING A HEATING SYSTEM**
TIERHALTUNGSSYSTEM MIT EINEM HEIZUNGSSYSTEM
CONFINEMENT D'ANIMAUX AVEC SYSTÈME DE CHAUFFAGE

(30) Priority: 11.04.2023 GB 202305307
(43) Date of publication of application: 16.10.2024
(73) Proprietor: CASCO Europe Limited, Worthing, West Sussex BN11 1RL (GB)
(72) Inventor: BUBEAR, Matthew, Horsham, RH12 3JR (GB)
(74) Representative: Windsor, Louise

(56) References cited:
- WO-A1-2022/115504
- KR-B1- 102 441 125
- SK-Y1- 9 560
- US-B2- 9 179 800

## Description

The present invention relates to a heating system for an animal enclosure system and an animal enclosure system for a small mammal or a reptile.

It is common in veterinary practices or veterinary hospitals for small mammals, such as cats; dogs; rodents including rats, mice, gerbils, guinea pigs and other small mammals such as rabbits and hedgehogs to be kept in enclosures when they are being treated or recovering from treatment. Known enclosures usually comprise cages arranged in a stack or bank. Each cage has a mesh door that allows air to flow into the cage and also allows the animal to be seen. For animal use, such metal cages are hardwearing, but they have been found to be heavy, noisy and to block light. Furthermore, the weight of the cages when stacked, and with animal patients contained therein, is significant. This is problematic when the stacked cages require repair, and particularly when a significant number of animals are housed in multiple stacked cages. It is known that toughened glass enclosures improve the appearance of a clinical veterinary practice and also that they allow enhanced visibility by letting in natural light. However, if additional electronic components of such toughened glass enclosures fail and require repair or replacement, this requires the stack of veterinary enclosures to be dismantled to access electronic components. Dismantling such a stack of enclosures is time consuming and requires multiple service engineers because of the weight of the enclosure. During the time taken for repair there is disruption to the veterinary practice, including the need to move animal patients, which is detrimental to their recovery.

It is also known that it is beneficial to keep animal patients warm during anaesthesia and in recovery and so warming blankets can be used, which are wrapped around the animal to deliver warmth directly to the animal patient's skin. This reduces the risk of hypothermia before, during and after any operation is performed. Known warming devices can be passive to promote heat retention or active systems wherein the blanket is made of a conductive material and connected to a power source. Such warming blankets are often disposable but can be reusable, which requires thorough cleaning between uses to prevent cross-contamination. However, there are problems associated with known passive and active warming blankets with respect to the control of patient temperature and safety concerns if the animal is left wrapped in an active warming blanket for too long.

Animal enclosures are also used in retail displays for pets such as small mammals or reptiles. Multiple different types of animals are housed in the display, but each animal's ideal temperature can vary. Heat pads on which the animals sit can be used but these either need to be disposable or require thorough cleaning between uses. It can be difficult to safely house the electronic controls for pet heating pads within the animal housing. Document SK 9560 Y1 discloses a mobile module for housing animals, wherein a plug-in modular board for mounting electronic components such as a heating element is placed in the upper part of the module. Document WO 2022/115504 A1 discloses an electric heating blanket comprising two or more heating segments and a single connector configured for power supply and/or temperature sensing. Document KR 102 441 125 B1 discloses an animal container comprising an outer frame having a climatic compartment for receiving a cooling or heating medium therein said climate compartment being provided below a companion animal chamber and having an orifice for horizontally inserting the cooling or heating medium into said climate compartment.

The present invention sets out to provide an improved animal enclosure comprising an improved heating system, which addresses the above-described problems.

In one aspect, not according to the invention a heating system for an animal enclosure system is provided, the system comprising: at least one heat transfer plate having at least one heated surface on a first face and at least one mounting surface on an opposing second face, wherein the or each mounting member, wherein the mounting member is slidable along a guide to insert the heat transfer plate into a recess within an animal enclosure; and a power connection and/or a temperature sensor connection adjacent to the or each mounting member, wherein insertion of the heat transfer plate into a recess connects the power connection and/or the temperature sensor connection for the heat transfer plate.

Preferably, the heating system is for a veterinary enclosure.

In a further aspect, the invention provides an animal enclosure system for an animal such as a small mammal or reptile as defined in independent claim 1.

Preferably, the animal enclosure system is a veterinary enclosure system.

The present invention allows for the heating system to be installed and maintained safely and conveniently, minimising any "down time" when the housing is not in use and without the need to move any animals/animal patients housed within the enclosure. The ease and safety of installation of the heating system is not affected by the number of housings stacked in the animal/veterinary enclosure system or the weight supported by such a system because it is not necessary to dismantle the stack to install the heating system or to replace/repair any components. The ease of installation of the heating system allows for use in pet retail and for use by consumers at home to house cats; dogs; rodents including rats, mice, gerbils, guinea pigs and other small mammals such as rabbits and hedgehogs. The animal enclosure system is also suitable for housing reptiles; for example, Bearded Dragons, geckos, chameleons, snakes and spiders.

When used for veterinary purposes, the heating system and veterinary enclosure system incorporating the heating system significantly improve the recovery of the animal patient by allowing for careful control of the temperature of the housing. The heating system does not interfere with cleaning of the internal walls of the housing that come into contact with an animal patient. That is, the present invention is a significantly more hygienic solution than warming blankets, which wrap directly around an animal. Furthermore, the temperature of each housing can be controlled independently of other housings in a stack.

The present invention allows for a modular system that is a significant improvement over known, stacked cage systems. The present invention has been carefully configured to offer functionality and flexibility for housing multiple animals in a pet retail space or treatment space, such as a veterinary practice or veterinary hospital. If there is a failure of a heating system within the modular system, only the faulty heating system needs to be replaced without any need to dismantle the respective housing or any other parts of the system.

Preferably, the or each mounting member is slidable along a guide rail to insert the heat transfer plate into the recess.

It is understood that in the context of the invention a "guide" is a structural member/support configured to guide the movement of the mounting member into the recess.

Preferably, the or each mounting member comprises a C-shaped cross-sectional profile. Optionally, the or each mounting member comprises a U-shaped cross-sectional profile or an L-shaped cross-sectional profile.

Preferably, the or each mounting member comprises a C-shaped cross-sectional profile having an outer width of between about 9mm and about 13mm; more preferably, the or each mounting member comprises a C-shaped cross-sectional profile having an outer width of about 11mm.

Preferably, the or each mounting member comprises a C-shaped cross-sectional profile having an outer height of between about 9mm and about 13mm; more preferably, the or each mounting member comprises a C-shaped cross-sectional profile having an outer height of about 11mm.

Preferably, the or each mounting member comprises a C-shaped cross-sectional profile having an inner width of between about 5mm and about 9mm; more preferably, the or each mounting member comprises a C-shaped cross-sectional profile having an inner width of about 7mm.

Preferably, the or each mounting member comprises a C-shaped cross-sectional profile having a wall thickness of between about 1mm and about 3mm; more preferably, the or each mounting member comprises a C-shaped cross-sectional profile having a wall thickness of about 2mm.

Preferably, the or each guide rail comprises a substantially cylindrical bar.

Optionally, the or each guide rail comprises a substantially cuboidal bar.

Preferably, the or each guide rail comprises a substantially cylindrical bar having a cross-sectional diameter of between about 4mm and about 8mm. More preferably, the or each guide rail comprises a substantially cylindrical bar having a cross-sectional diameter of about 6mm.

Preferably, the or each guide rail comprises a substantially cylindrical bar having a length of between about 400mm and about 700mm. Preferably, the or each guide rail comprises a substantially cylindrical bar having a length of about 650mm or a length of about 420mm.

It has been found that the configuration of the cylindrical guide rail and C-shaped mounting member is particularly well-suited to the present invention because this mounting mechanism allows the ease of installation to slide the heat transfer plate into the position whilst ensuring that the heat transfer plate is close enough to the base of the housing to achieve effective and efficient heat transfer.

Preferably, the or each guide rail further comprises a PVC sleeve. Preferably, the or each guide rail further comprises a PVC sleeve having a wall thickness of less than about 1mm. Preferably, the or each guide rail further comprises a PVC sleeve having a wall thickness of about 0.5mm.

The PVC sleeve provides a pliable, soft surface to protect the powder coated aluminium base plinth when the heat transfer plate is installed by sliding the or each mounting member along the guide rail.

Preferably, the or each guide rail comprises a substantially cylindrical threaded bar.

Optionally, the or each mounting member comprises a substantially cylindrical threaded bar.

Preferably, the heating system further comprises a male connector housing a power connection and a temperature sensor connection.

Preferably, the or each guide is sloped. Preferably, the or each guide rail is sloped.

Preferably, the or each guide rail slopes downward towards the opening of the recess.

In the context of this invention, "downward" is understood to refer to a direction towards the floor of the room in which the animal enclosure system is installed.

Preferably, the or each guide is aluminium.

Preferably, the or each guide is visible from the opening of the recess.

Preferably, the or each guide is moveably attached to the recess. More preferably, the or each guide is moveably attached to the rear wall of the recess.

Preferably, the or each guide rail has a length less that the depth of the recess.

The heating system is convenient to install, and the slope of the guide/guide rail guides the heating system into the correct position to achieve perfect alignment. The replacement of the heating system can easily be achieved by one person without requiring them to have any technical expertise or to dismantle other parts of the system. Allowing the guide/guide rail to flex or move slightly improves the ease of installation when the or each mounting member is aligned to slide along a respective guide/guide rail. The ease of installation is further improved by allowing a user to view the end of the guide/guide rail through the outer, open face of the recess. The guide/guide rail has a length less that the depth of the recess to enable the slight movement of the guide/guide rail to mate with the respective mounting member. The initial, manual alignment of the mounting member to the guide/guide rail can be easily achieved regardless of the weight and size of the animal enclosure stack or whether the heating system is to be installed at base level or on the first, second or higher level of a stack of housings.

Preferably, the or each housing comprises a base and the or each heated surface of the or each heat transfer plate is beneath the base.

Preferably, the recess further comprises a gap between the base of the housing and the or each heated surface of the or each heat transfer plate of between about 1mm and about 5mm. More preferably, the recess further comprises a gap between the base of the housing and the or each heated surface of the or each transfer plate of about 2mm.

The proximity of the heated surface of the heat transfer plate to the base of the housing ensures that there is efficient heat transfer from the heated surface to the housing to achieve the required temperature within the housing.

Preferably, the power connection and/or the temperature sensor connection are push-fit. Preferably, the or each recess comprises a power socket and a temperature probe socket.

The connection of the heating system ensures that the power and temperature sensor connections cannot be misaligned. The guides/guide rails and mounting members are carefully configured to ensure that the heating system cannot be installed incorrectly and does not a require a user to adjust or reconfigure the components for installation. For installation, the user only needs to align the guides and the mounting members to ensure that the heating system is correctly connected both electrically and mechanically. The connection between the power/temperature sensor and the heat transfer plate is actioned by inserting the heat transfer plate fully into the recess and locks the plate into position with the mounting members supported by the guide/guide rails.

Preferably, the or each heat transfer plate comprises a solid-state heating means.

Preferably, the or each heat transfer plate comprises a thermostatically controlled heating means.

Preferably, the or each heat transfer plate comprises a sealed PVC printed film.

Preferably, the or each heat transfer plate further comprises at least one layer of adhesive.

Preferably, the or each heat transfer plate has a maximum temperature of between about 25°C and about 40°C. More preferably, the or each heat transfer plate has a maximum temperature of about 25°C or about 40°C.

It has been found that the thermostatically controlled heat plates can maintain the temperature within each housing to meet an animal patient's needs. For veterinary use, the temperature within each housing can be varied from ambient room temperature to 29°C as required.

Preferably, the or each heat transfer plate has a power output of about 28W or about 82W.

The present invention allows for alternative heat transfer plates to be used according to the specific needs of the animal patient. The heat transfer plates can be quickly and conveniently changed depending on the animal patient to increase/decrease the temperature/power required; for example, depending on which type of animal is housed in the veterinary enclosure or the animal's specific treatment/recovery needs. Similarly, for pet retail applications, the present invention allows for alternative heat transfer plates to be used according to the specific needs of the small mammal or reptile that is on display.

Preferably, the or each heat transfer plate further comprises at least one insulated area.

Preferably, the or each insulated area is a composite dielectric board.

The animal enclosure system of the present invention provides the animal patient with the option to move on and off the heated area of the base of the housing if required. The animal has the option to thermo-regulate themselves by deciding in which area they would like to rest/recover. This ensures the comfort of an animal patient in recovery and conserves heat generated in the heated area of the housing. In contrast to known solutions, such as heated blankets there is no risk of overheating/burns to the animal patient if they are left in the housing. Preferably, the or each guide/guide rail is substantially parallel to the depth of the housing. Preferably, the or each guide/guide rail is longitudinal in a direction from the opening of the housing to the rear wall of the housing. Preferably, the or each guide/guide rail is parallel to the depth of the housing and has a length of about 75% of the depth of the housing.

It is understood that in the context of the invention "longitudinal" means from front to back and the "rear" wall of the housing is furthest from and substantially parallel to the opening into the housing.

Preferably, the animal enclosure system comprises at least one control panel.

Preferably, the animal enclosure system comprises a plurality of animal housings and a plurality of control panels, wherein each control panel is configured to control conditions within a single housing.

The present invention allows for conditions within each individual housing of an animal enclosure system to be controlled separately. In larger veterinary practices or pet retail space there may be a significant number of animal patients each with different recovery requirements or at different stages of treatment. The present invention allows a veterinary or animal care practitioner to provide the best conditions for treatment and recovery according to the needs of each individual patient. By having a heating system allocated to each housing the temperature within each housing can be set to the temperature best suited to the animal patient contained therein.

Furthermore, the present invention has an environmental and economic benefit to the veterinary practitioner or pet retail manager by allowing a reduction in energy use for heating. This is in addition to the option to reduce energy use for lighting and ventilation. The installation of a heating system for each individual housing allows for maximum flexibility in choosing which housing/s within the animal enclosure system to heat. The individual control panels allow a user to only provide heat, light and ventilation to housings that are in use. In large practices, rather than heating, lighting and ventilating an entire ward/stack of enclosures when the ward/stack is not fully occupied, a user can select only to heat, light and ventilate the required individual animal housings by using the control panel for the required housing/s.

Preferably, the animal enclosure system comprises at least one wipe- clean board.

More preferably, the or each wipe-clean board further comprises a light; most preferably, the or each wipe-clean board is back-lit.

By providing a wipe clean board for a practitioner to record information, the present invention allows for medical notes and instructions to be clearly visible and associated with a respective housing. This avoids the need for clipboards/notes to be attached to obscure the opening to the housing. By recording information directly on the enclosure, the risk of errors in treatment is also reduced; for example, when instructions are missed or mis-placed. By illuminating the board for displaying patient information, notes can be recorded and viewed even in low light conditions, reducing any disturbance to the animal patient/s housed in the enclosure.

Preferably, the or each door is made of toughened safety glass.

Preferably the or each housing and/or the or each door is made of toughened safety glass.

Preferably, the toughened safety glass has a thickness of between about 6mm and 10mm; more preferably, the toughened safety glass has a thickness of about 8mm.

The toughened safety glass enclosure is significantly quieter than traditional stainless-steel cages, which improves the working environment for veterinary practitioners and also aids animal recovery. Furthermore, the toughened safety glass enclosure can be conveniently cleaned to provide a hygienic environment for animal treatment and recovery. The toughened safety glass is also strong and secure enough to allow the modular system of the present invention to be stacked so that even with a stack of units and animals contained therein the system is stable and secure.

Preferably, the or each door comprises at least one cover layer; preferably, at least one translucent cover layer; more preferably, a vinyl cover layer.

By applying a vinyl cover layer that diffuses light entering the housing, the environment for an animal housed within the housing is calmer and so recovery is improved.

Preferably, the or each door further comprises at least one hinge; more preferably, the or each door comprises a pair of hinges.

Preferably, the or each hinge is resiliently-biased; more preferably, the or each hinge is spring-loaded.

Preferably, the or each door is lockable. More preferably, the or each door comprises a lock. Preferably, the or each door comprises a latch. More preferably, the or each door comprises a resiliently biased latch.

Preferably, the or each housing is cuboidal.

Preferably, the animal enclosure system comprises a plurality of housings. Preferably, the animal enclosure system comprises a plurality of stackable housings.

The present invention is a modular system that can be conveniently adapted according to the requirements of a veterinary practice or pet retail space. The size and number of housings that are stacked in the animal enclosure system can be adapted according to the type and number of animals to be housed. The configuration of the modular system can be carefully planned to aid animal recovery and can be changed by reusing components.

Preferably, the or each housing has a width of between about 600mm and 1250mm.

Preferably, the or each housing has a depth of between about 500mm and 900mm.

More preferably, the or each housing has a depth of about 700mm.

Preferably, the or each housing has a height of between about 400mm and 1100mm.

More preferably, the or each housing has a height of between about 400mm and 900mm.

It is understood that in the context of this invention the "height" of the housing is the dimension perpendicular to the floor and parallel to the walls of the treatment room; the "depth" of the housing is the dimension between the door of the housing and the rear wall of the housing; the "width" of the housing is the horizontal measurement from one side to an opposing side of the housing, perpendicular to the depth.

Preferably, the animal enclosure system further comprises a removable divider. More preferably, the animal enclosure system further comprises a slidable, removable divider.

Preferably, the divider is made of an anti-bacterial material.

The removable divider of the present invention allows a user to decide how many compartments they require depending on the animal patients that they need to house. For example, if an animal requires more space the divider can be removed to provide a single space within the enclosure having a greater volume. However, if less space is required and/or the user needs to house more animals, the divider can be inserted to create two compartments within the housing.

Preferably, the animal enclosure system comprises at least one base plinth.

Preferably, the animal enclosure system comprises at least four adjustable feet. More preferably, the animal enclosure system comprises screw-threaded, adjustable feet.

The present invention can be easily and safely installed, which is particularly important when the modular system comprises multiple housings that are stacked. The animal enclosure system may not necessarily be installed on a perfectly horizontal floor and so the adjustable feet allow the base of the enclosure to be adjusted to rest securely and ensure that the base is horizontal so that any animals enclosed in the housing/s are safe and comfortable.

Preferably, the or each door further comprises a locking member. More preferably, the or each door comprises a resiliently biased locking member.

Preferably, the or each door comprises a latch and the respective opening to the housing comprises a latch channel into which the latch is received in a locked configuration. More preferably, the or each door comprises a twistable latch and the respective opening to the housing comprises a latch channel into which the latch is received in a locked configuration.

To improve the security and ease of use of the animal enclosure system, the doors can be easily locked; for example, a user can secure the door in a locked position with one-handed operation.

Within this specification, the term "about" means plus or minus 20%; more preferably, plus or minus 10%; even more preferably, plus or minus 5%; most preferably, plus or minus 2%.

It is understood that the "veterinary" enclosure of the present invention is beneficial for use by veterinary practitioners treating animals, but the present invention can also be used by pet owners who are caring for animal patients or by pet store owners housing pets for display purposes.

For the purposes of clarity and a concise description, features are described herein as part of the same or separate embodiments; however, it will be appreciated that the scope of the invention may include embodiments having combinations of all or some of the features described.

The invention will now be described by way of example with reference to the accompanying drawings, in which: -
Figure 1 is a perspective view of an animal enclosure system in accordance with the present invention;
Figure 2 is an enlarged rear perspective view showing a heating system for an animal enclosure system in accordance with the present invention with a heat transfer plate installed for the first and second levels of housing within the enclosure system;
Figure 3 is an enlarged rear perspective view showing a heating system for an animal enclosure system in accordance with the present invention with a heat transfer plate prior to installation for each of the first and second levels of housing;
Figure 4 is an enlarged front perspective view showing a heating system for an animal enclosure system in accordance with the present invention with a heat transfer plate prior to installation for each of the first and second levels of housing;
Figure 5 is a perspective view from below showing a heating system for an animal enclosure system in accordance with the present invention with a heat transfer plate prior to installation for each of the first and second levels of housing;
Figure 6 is a front perspective view of a heating system for an animal enclosure system in accordance with the present invention with a heat transfer plate installed on a base plinth and the recess obscured by a floor seal;
Figure 7 is a side perspective view showing the mounting members and guide rails prior to installation of a heat transfer plate;
Figure 8 is a perspective view of an animal enclosure system in accordance with a second embodiment of the present invention, which is used for housing small animals, such as reptiles; and
Figure 9 is a view from below showing the mounting members and guide rails to install heat transfer plates in the embodiment shown in Figure 8.

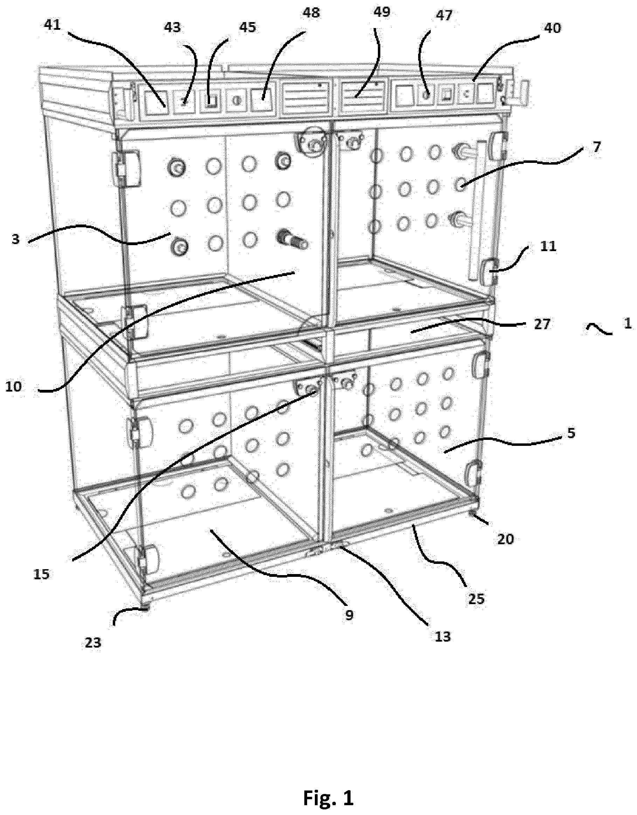

Referring to Figure 1, the animal enclosure system 1 of the present invention is shown and comprises four compartments or housings 3. In the embodiment shown, each compartment/housing 3 has the same dimensions and is made of toughened safety glass having a beveled edge and a thickness of about 8mm. There are two lower housings and two upper housings 3. In alternative configurations, there are housings of different sizes; for example, a walk-in housing for a large dog, which has a double height; and a smaller housing for a cat. The configuration of the present invention can be adapted to the animals that are to be housed and the available space in the treatment building. Each housing/compartment 3 further comprises at least one channel (not shown) along the base of the housing 3 between the door 5 and a rear wall of the housing. A divider 10 can be inserted into the channel to separate compartments within the housing.

Each housing 3 comprises a rectangular, movable door 5 and there is a plurality of circular, polished, ventilation apertures 7 through each movable door 5 with smooth edges to allow fresh air to flow through the housing. Each movable door 5 is mounted to an outer wall of the housing 3 by a pair of stainless steel, sprung-loaded hinges 11. In a preferred embodiment of the present invention, each door 5 further comprises a translucent vinyl cover (not shown) to allow the animal to see out of the housing 3, whilst providing a calm environment for their recovery and/or treatment. Each door 5 is moveable between an open position and the closed position shown in Figure 1, wherein in a closed position the door 5 is secured by a latch 13. The latch 13 is spring-loaded and shown positioned on the base plinth 25 of the enclosure 1. The latch 13 allows for one-handed operation using a knurled handle 15, which can be turned either clockwise or anti-clockwise to release the latch 13.

As shown in Figure 1, the animal enclosure system 1 is mounted on four adjustable feet 20, which are each adjustable so that the base of each housing 3 is horizontal when the animal enclosure system 1 is resting securely on the floor of the treatment building. Each of the adjustable feet 20 is made of a non-porous, nylon material and comprises a levelling thread and a levelling locking nut 23. In use, each foot 20 is manually adjusted without the need for additional tooling. When the animal enclosure system 1 has been levelled, a clip-fit vertically adjustable rubber valance floor seal is pushed into place to conceal the feet 20 and to prevent dirt being drawn under the base of the animal enclosure system 1.

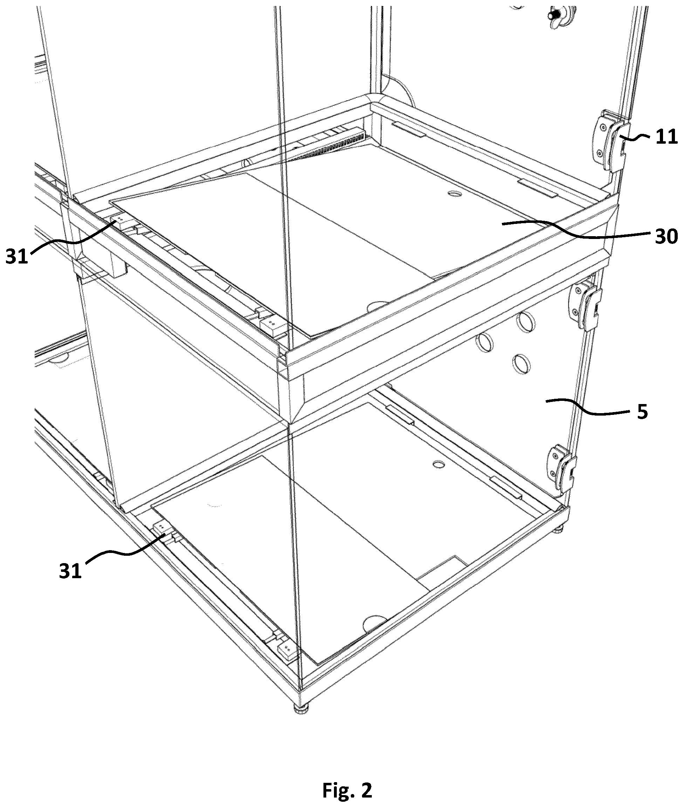

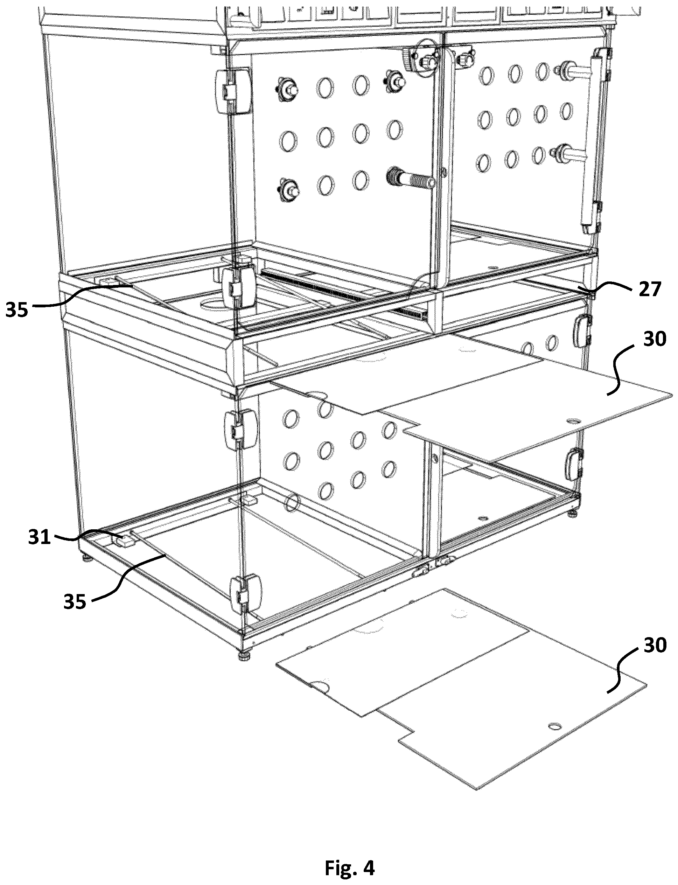

Referring to Figures 2, 3 and 4, a heating system for an animal enclosure system is shown, comprising a heat transfer plate 30 having an upper heated surface and a lower mounting surface.

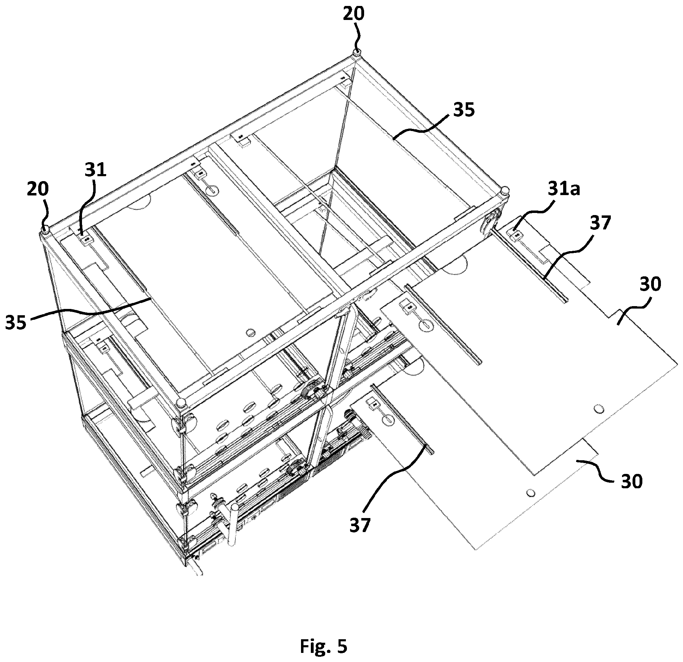

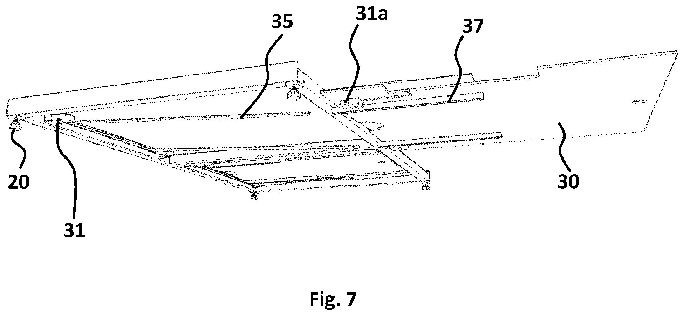

Referring to Figures 5 and 7, the lower mounting surface of the heat transfer plate 30 comprises a pair of mounting members 37. Each mounting member 37 has a substantially C-shaped cross-section having an outer width of 11mm, an inner width of 7mm and an outer height of 11mm. The wall thickness of the mounting member 37 is about 2mm. A power connection and a temperature sensor connection 31a are mounted adjacent to the or each mounting member 37. The plug or male connector 31a houses the power connection and a temperature sensor connection.

Referring to Figure 1, below each level of the stacked housings 3 is a recess 27. In use, a heat transfer plate 30 is installed in the recess 27, which is then concealed by the control panel 40 or the base plinth/valance seal 25, depending upon whether the housing in question is positioned on the floor or above another housing.

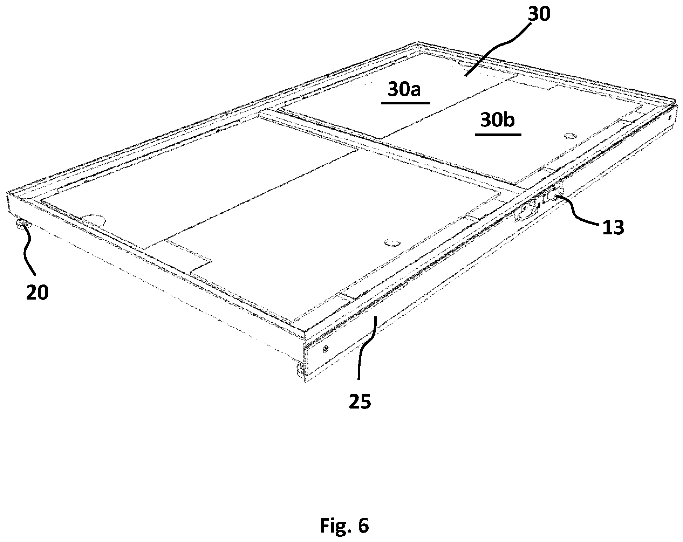

Referring to Figure 6, in a preferred embodiment of the invention the heat transfer plate 30 comprises a thermostatically controlled heated plate 30a. In the embodiment shown in Figure 6, the heat transfer plate comprises the heated plate 30a and an insulated area 30b. The heated plate 30a comprises a sealed PVC printed film and has a power output of 28W or 82W. The insulated area 30b is a composite dielectric board.

Referring to Figure 6, when the heat transfer plate 30 is installed, the thermostatically controlled heated plate 30a is innermost with respect to the opening/door 5. In an alternative embodiment (not shown), the heat transfer plate 30 sits below the entire base of the housing 3.

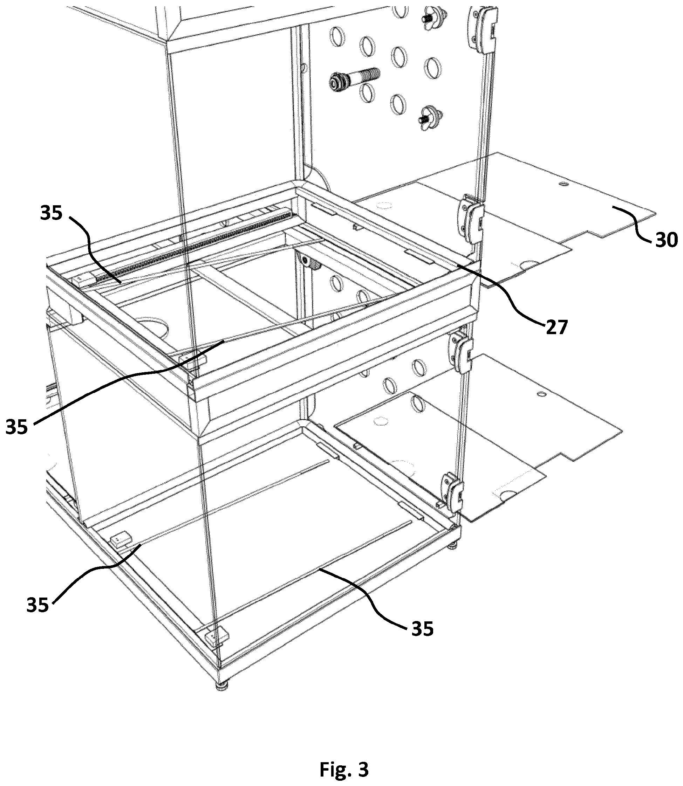

Referring to Figures 3, 4, 5 and 7, the heat transfer plate 30 is shown prior to insertion into the opening of the recess 27. A pair of aluminum guide rails 35 are positioned within the recess and are attached to the rear wall of the recess 27. The attachment of the guide rails 35 to the rear wall of the recess allows a small amount of flexibility/movement of the guide rails 35. The guide rails 35 slope downward towards the opening of the recess 27 and each guide rail 35 is visible from the opening of the recess to allow for installation of the heating system into the recess 27. Each guide rail is substantially parallel to the depth of the housing 3, perpendicular to the door opening of the housing 3 and is from the opening of the housing to the rear wall of the housing 3.

Referring to Figures 5 and 7, adjacent to each guide rail is a power connection and temperature sensor socket 31. As shown in Figure 7, in a preferred embodiment the power and temperature sensor connection are provided in a single socket 31.

As shown in Figures 3 and 5, to install the heat transfer plate 30 into an animal enclosure system 1, each mounting member 37 is aligned with the respective guide rail 35 by visual inspection through the opening of the recess 27. The C-shaped profile of the mounting member 37 makes contact with a respective guide rail 35. The heat transfer plate 30 can then be pushed to slide at a slight upward angle into the recess 27. The mounting members 37 slide along the guide rails 35 so that the heat transfer plate is supported and aligned. When the heat transfer plate is fully inserted the plug or male connector 31a, which houses a power connection and a temperature sensor connection, is aligned to meet and connect with the single socket 31 to provide connection to mains power and temperature measurement for the heat transfer plate 30.

The guide rail and mounting member shown in Figures 2, 3, 4, 5 and 7 are understood to be capable of being provided in alternative configurations wherein either the guide rail or the mounting member are inserted into the other component to allow the heat transfer plate to slide into the recess. For example, a T-slot sliding insert could be used or rollers could be incorporated.

In use, as shown in Figure 5, when the heat transfer plate 30 is installed into the recess 27 below a housing 3, the heated surface of the heat transfer plate 30 is beneath the base of the housing 3. The gap between the heat transfer plate 30 and the base wall of the housing 3 is about 2mm to ensure optimal heat transfer. As shown in Figures 1 and 6, when the heat transfer plate 30 is installed the base plinth 25 or the control panel 40 are connected to conceal the recess 27 and the heat transfer plate 30.

As shown in Figure 1, above each housing 3 is a control panel 40, which is removable and is made of powder coated aluminum. Whilst these are only shown above the upper housings, it will be appreciated that they are also provided above the lower housings with their omission in Figure 1 to show the recess behind each control panel 40. Each control panel 40 independently controls conditions within an individual housing 3 within the animal enclosure system 1. The control panel 40 comprises an extraction fan switch 41 connected to an external extraction fan ducted to the animal enclosure system 1. The control panel 40 further houses a mains power outlet 43 that is used to provide easy access to a power supply and is configured according to the region of operation of the animal enclosure system 1. The control panel 40 also includes a thermostatic temperature control switch 45, a lighting control switch 47 and a lighting on/off/dimmer switch 48 for each enclosure 3. The thermostatic temperature control switch 45 allows the heating system to each housing 3 to be switched on and off and to control the temperature within the housing 3. Each heat transfer plate has a maximum temperature of between about 25°C and about 40°C, which is adjusted according to the temperature set on the temperature control switch 45 on the control panel 40.

The lighting control switch 47 is used to switch between different LED radiation sources to provide each enclosure with either daylight/white light, or red light to aid recovery or blue light to assist with cleaning of the housing. The further lighting on/off/dimmer switch 48 can be pressed once to turn the lighting within the housing 3 on or off and is pressed for a greater period of time to increase or decrease (dim) the light intensity. The control panel 40 also has a backlit whiteboard 49 for each housing 3, which is used to record information about the animal patient and can be wiped clean to remove information stored thereon. Each of the controls 41, 45, 47, 48 is arranged to control the lighting and heating within the housing 3 below. The present invention allows for independent control of the conditions within each housing 3.

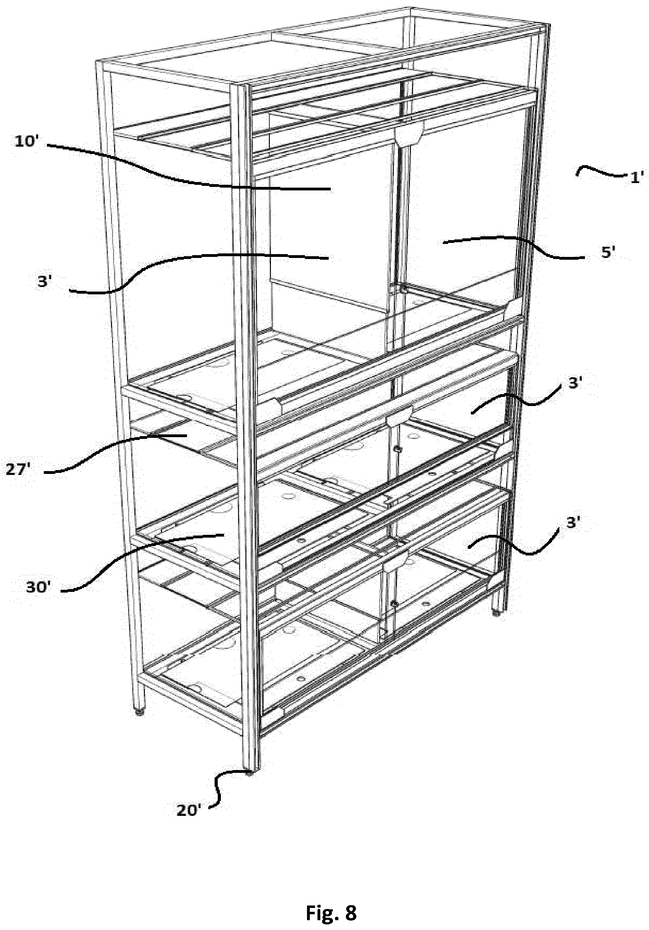

Referring to Figure 8, an alternative embodiment of the animal enclosure system 1' for use in pet retail or display is shown. The animal enclosure system comprises two upper housings 3' and two lower housings 3' The upper housings 3 each have height 820mm, width of 615mm and depth 500mm. The lower housings have a lesser volume and height of 420mm, width of 615mm and depth of 500mm. The configuration of the present invention can be adapted to the animals that are to be housed and the available space in the treatment building. Each housing/compartment '3 further comprises at least one channel (not shown) along the base of the housing 3' between the front display window 5' and a rear wall of the housing 3'. A divider 10' can be inserted into the channel to separate compartments within the housing.

As previously described, the animal enclosure system 1' of Figure 8 is mounted on four adjustable feet 20, which are each adjustable so that the base of each housing 3' is horizontal when the animal enclosure system 1 is resting securely on the floor of the treatment building. The animal enclosure system 1' comprises a heat transfer plate 30' having an upper heated surface and a lower mounting surface with a heat transfer plate width of 540mm and a depth of 376mm.

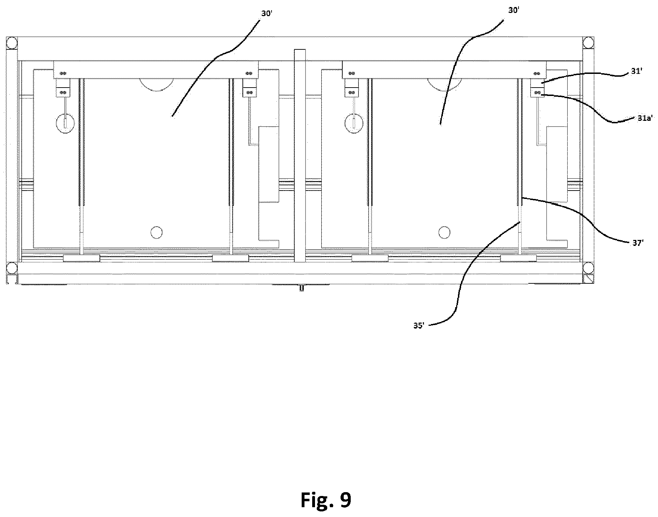

Referring to Figure 9, and as previously described, the lower mounting surface of the heat transfer plate 30' comprises a pair of mounting members 37'. Each mounting member 37' has a substantially C-shaped cross-section having an outer width of 11mm, an inner width of 7mm and an outer height of 18mm. The wall thickness of the mounting member 37' is about 2mm. A power connection and a temperature sensor connection 31a' are mounted adjacent to the or each mounting member 37'. The plug or male connector 31a' houses the power connection and a temperature sensor connection. Referring to Figure 8, below each level of the stacked housings 3' is a recess 27'. Referring to Figure 9, in use, a heat transfer plate 30' is installed in the recess, which is then concealed by a control panel or plinth, depending upon whether the housing in question is positioned on the floor or above another housing and depending on the display requirements of the user. The configuration of the guide rails 35' and mounting members 37' is as previously described.

Referring to Figure 8 and Figure 9, to install the heat transfer plate 30' into the animal enclosure system 1' for animal display, each mounting member 37' is aligned with the respective guide rail 35' by visual inspection through the opening of the recess 27'. The C-shaped profile of the mounting member 37' makes contact with a respective guide rail 35'. The heat transfer plate 30' can then be pushed to slide at a slight upward angle into the recess 27'. The mounting members 37' slide along the guide rails 35' so that the heat transfer plate is supported and aligned. When the heat transfer plate is fully inserted the plug or male connector 31a', which houses a power connection and a temperature sensor connection, is aligned to meet and connect with the single socket 31' to provide connection to mains power and temperature measurement for the heat transfer plate 30'.

The above-described embodiment has been given by way of example only, and the skilled reader will naturally appreciate that many variations could be made thereto without departing from the scope of the claims.

## Claims

1. An animal enclosure system (1) for an animal such as a small mammal or reptile comprising:
at least one animal housing (3) wherein the or each housing comprises at least one moveable door (5), wherein the or each door is moveable between a closed position covering an opening into the housing and an open position allowing access to the inside of the housing;
at least one recess (27) below the or each animal housing comprising an opening thereto and at least one guide (35);
wherein the or each recess further comprises at least one power connection and/or at least one temperature sensor connection (31); and
a heating system comprising at least one heat transfer plate (30) having at least one heated surface on a first face and at least one mounting surface on an opposing second face,
wherein the or each mounting surface comprises at least one mounting member (37),
**characterised in that** the or each mounting member is slidable along the at least one guide (35) to insert the heat transfer plate into the recess within the animal enclosure; and
a power connection and/or a temperature sensor connection adjacent to the or each mounting member;
wherein insertion of the heat transfer plate into the recess connects the power connection and/or the temperature sensor connection for the heat transfer plate.

2. An animal enclosure system (1) according to claim 1 wherein the or each guide comprises a guide rail (35).

3. An animal enclosure system (1) according to claim 2 wherein the or each guide rail (35) comprises a substantially cylindrical threaded bar.

4. An animal enclosure system (1) according to claim 2 or claim 3 wherein the or each guide rail (35) slopes downward towards the opening of the recess (27)

5. An animal enclosure system (1) according any of claims 1 to 4 wherein the or each mounting member comprises a C-shaped cross-sectional profile.

6. An animal enclosure system (1) according to claim 5 wherein the or each mounting member comprises a C-shaped cross-sectional profile having an outer width of between about 9mm and about 13mm; and/or an outer height of between about 9mm and about 13mm; and/or an inner width of between about 5mm and about 9mm; and/or a wall thickness of between about 1mm and about 3mm.

7. An animal enclosure system (1) according to claim 2:
a) wherein the or each guide rail (35) comprises a substantially cylindrical bar; and/or
b) wherein the or each guide rail (35) further comprises a PVC sleeve; and/or
c) wherein the or each guide rail (35) has a length less than the depth of the recess (27).

8. An animal enclosure system (1) according to claim 2:
d) wherein the or each guide rail (35) is sloped; and/or
e) wherein the or each guide rail (35) is moveably attached to the rear wall of the recess (27).

9. An animal enclosure system (1) according to any preceding claim wherein the or each housing comprises a base and the or each heated surface of the or each heat transfer plate is beneath the base.

10. An animal enclosure system (1) according to claim 9 wherein the recess further comprises a gap between the base of the housing and the or each heated surface of the or each heat transfer plate of between about 1mm and about 5mm.

11. An animal enclosure system (1) according to any preceding claim comprising a plurality of animal housings and a plurality of control panels (40), wherein each control panel is configured to control conditions within a single housing.

12. An animal enclosure system (1) according to any preceding claim comprising a plurality of stackable housings.

## Patentansprüche

1. Tierhaltungssystem (1) für ein Tier wie z. B. ein kleines Säugetier oder Reptil, umfassend:
mindestens ein Tiergehäuse (3), wobei das oder jedes Gehäuse mindestens eine bewegbare Tür (5) umfasst, wobei die oder jede Tür zwischen einer geschlossenen Position, die eine Öffnung in das Gehäuse abdeckt, und einer offenen Position, die den Zugang zum Inneren des Gehäuses erlaubt, bewegbar ist;
mindestens eine Ausnehmung (27) unterhalb des oder jedes Tiergehäuses, umfassend eine Öffnung dazu und mindestens eine Führung (35);
wobei die oder jede Ausnehmung ferner mindestens einen Stromanschluss und/oder mindestens einen Temperatursensoranschluss (31) umfasst; und
ein Heizsystem, umfassend mindestens eine Wärmeübertragungsplatte (30) mit mindestens einer beheizten Oberfläche auf einer ersten Fläche und mindestens einer Montageoberfläche auf einer gegenüberliegenden zweiten Fläche,
wobei die oder jede Montageoberfläche mindestens ein Montageelement (37) umfasst,
**dadurch gekennzeichnet, dass** das oder jedes Montageelement entlang der mindestens einen Führung (35) verschiebbar ist, um die Wärmeübertragungsplatte in die Ausnehmung innerhalb der Tierhaltung einzuführen; und
einen Stromanschluss und/oder einen Temperatursensoranschluss angrenzend an das oder jedes Montageelement;
wobei das Einführen der Wärmeübertragungsplatte in die Ausnehmung den Stromanschluss und/oder den Temperatursensoranschluss für die Wärmeübertragungsplatte verbindet.

2. Tierhaltungssystem (1) nach Anspruch 1, wobei die oder jede Führung eine Führungsschiene (35) umfasst.

3. Tierhaltungssystem (1) nach Anspruch 2, wobei die oder jede Führungsschiene (35) eine im Wesentlichen zylindrische Gewindestange umfasst.

4. Tierhaltungssystem (1) nach Anspruch 2 oder Anspruch 3, wobei die oder jede Führungsschiene (35) hin zu der Öffnung der Ausnehmung (27) nach unten geneigt ist.

5. Tierhaltungssystem (1) nach einem der Ansprüche 1 bis 4, wobei das oder jedes Montageelement ein C-förmiges Querschnittsprofil umfasst.

6. Tierhaltungssystem (1) nach Anspruch 5, wobei das oder jedes Montageelement ein C-förmiges Querschnittsprofil mit einer Außenbreite zwischen etwa 9 mm und etwa 13 mm; und/oder einer Außenhöhe zwischen etwa 9 mm und etwa 13 mm;
und/oder einer Innenbreite zwischen etwa 5 mm und etwa 9 mm;
und/oder einer Wandstärke zwischen etwa 1 mm und etwa 3 mm umfasst.

7. Tierhaltungssystem (1) nach Anspruch 2:
a) wobei die oder jede Führungsschiene (35) eine im Wesentlichen zylindrische Stange umfasst; und/oder
b) wobei die oder jede Führungsschiene (35) ferner eine PVC-Hülle umfasst; und/oder
c) wobei die oder jede Führungsschiene (35) eine Länge aufweist, die weniger als die Tiefe der Ausnehmung (27) ist.

8. Tierhaltungssystem (1) nach Anspruch 2:
d) wobei die oder jede Führungsschiene (35) geneigt ist; und/oder
e) wobei die oder jede Führungsschiene (35) bewegbar an der Rückwand der Ausnehmung (27) angebracht ist.

9. Tierhaltungssystem (1) nach einem vorhergehenden Anspruch, wobei das oder jedes Gehäuse eine Basis umfasst und sich die oder jede beheizte Oberfläche der oder jeder Wärmeübertragungsplatte unterhalb der Basis befindet.

10. Tierhaltungssystem (1) nach Anspruch 9, wobei die Ausnehmung ferner einen Spalt zwischen der Basis des Gehäuses und der oder jeder beheizten Oberfläche der oder jeder Wärmeübertragungsplatte zwischen etwa 1 mm und etwa 5 mm umfasst.

11. Tierhaltungssystem (1) nach einem vorhergehenden Anspruch, umfassend eine Vielzahl von Tiergehäusen und eine Vielzahl von Bedienfeldern (40), wobei jedes Bedienfeld dazu konfiguriert ist, Bedingungen innerhalb eines einzelnen Gehäuses zu steuern.

12. Tierhaltungssystem (1) nach einem vorhergehenden Anspruch, umfassend eine Vielzahl von stapelbaren Gehäusen.

## Revendications

1. Système de confinement d'animaux (1) pour un animal tel qu'un petit mammifère ou reptile, comprenant :
au moins un logement d'animaux (3), ledit ou chaque logement comprenant au moins une porte mobile (5), ladite ou chaque porte étant mobile entre une position fermée recouvrant une ouverture dans le logement et une position ouverte permettant un accès à l'intérieur du logement ;
au moins un renfoncement (27) au-dessous dudit ou de chaque logement d'animaux, comprenant une ouverture de celui-ci et au moins un guide (35) ;
ledit ou chaque renfoncement comprenant en outre au moins un raccordement électrique et/ou au moins un raccordement de capteur de température (31) ; et
un système de chauffage comprenant au moins une plaque de transfert de chaleur (30) possédant au moins une surface chauffée sur une première face et au moins une surface de montage sur une seconde face opposée, ladite ou chaque surface de montage comprenant au moins un élément de montage (37), **caractérisé en ce que** le ou chaque élément de montage est coulissant le long du au moins un guide (35) pour insérer la plaque de transfert de chaleur dans le renfoncement à l'intérieur du confinement d'animaux ; et
un raccordement électrique et/ou un raccordement de capteur de température adjacent au ou à chaque élément de montage ;
l'insertion de la plaque de transfert de chaleur dans le renfoncement raccordant le raccordement électrique et/ou le raccordement de capteur de température pour la plaque de transfert de chaleur.

2. Système de confinement d'animaux (1) selon la revendication 1, ledit ou chaque guide comprenant un rail de guidage (35).

3. Système de confinement d'animaux (1) selon la revendication 2, ledit ou chaque rail de guidage (35) comprenant une barre filetée sensiblement cylindrique.

4. Système de confinement d'animaux (1) selon la revendication 2 ou la revendication 3, ledit ou chaque rail de guidage (35) s'inclinant vers le bas en direction de l'ouverture du renfoncement (27).

5. Système de confinement d'animaux (1) selon l'une quelconque des revendications 1 à 4, ledit ou chaque élément de montage comprenant un profil de section transversale en forme de C.

6. Système de confinement d'animaux (1) selon la revendication 5, ledit ou chaque élément de montage comprenant un profil de section transversale en forme de C possédant une largeur externe comprise entre environ 9 mm et environ 13 mm ; et/ou une hauteur externe comprise entre environ 9 mm et environ 13 mm ; et/ou une largeur interne comprise entre environ 5 mm et environ 9 mm ; et/ou une épaisseur de paroi comprise entre environ 1 mm et environ 3 mm.

7. Système de confinement d'animaux (1) selon la revendication 2 :
a) ledit ou chaque rail de guidage (35) comprenant une barre sensiblement cylindrique ; et/ou
b) ledit ou chaque rail de guidage (35) comprenant en outre un manchon en PVC ; et/ou
c) ledit ou chaque rail de guidage (35) possédant une longueur inférieure à la profondeur du renfoncement (27).

8. Système de confinement d'animaux (1) selon la revendication 2 :
d) ledit ou chaque rail de guidage (35) étant incliné ; et/ou
e) ledit ou chaque rail de guidage (35) étant fixé de manière mobile à la paroi arrière du renfoncement (27).

9. Système de confinement d'animaux (1) selon une quelconque revendication précédente, ledit ou chaque logement comprenant une base et ladite ou chaque surface chauffée de la ou de chaque plaque de transfert de chaleur étant sous la base.

10. Système de confinement d'animaux (1) selon la revendication 9, ledit renfoncement comprenant en outre un espace entre la base du logement et
la ou chaque surface chauffée de la ou de chaque plaque de transfert de chaleur, compris entre environ 1 mm et environ 5 mm.

11. Système de confinement d'animaux (1) selon une quelconque revendication précédente, comprenant une pluralité de logements d'animaux et une pluralité de panneaux de commande (40), chaque panneau de commande étant configuré pour commander des conditions à l'intérieur d'un seul logement.

12. Système de confinement d'animaux (1) selon une quelconque revendication précédente, comprenant une pluralité de logements empilables.
